# EUROPÄISCHE PATENTSCHRIFT

(11) **EP 2 874 845 B1**
(45) Veröffentlichungstag und Bekanntmachung des Hinweises auf die Patenterteilung: **22.06.2016**
(21) Anmeldenummer: 13734969.2
(22) Anmeldetag: 09.07.2013
(51) Int. Cl.: B60K 37/02, B60Q 3/04, B60K 35/00

(54) **ANZEIGEELEMENT, ANZEIGEINSTRUMENT, ANZEIGEVERFAHREN UND DARAUF AUSGERICHTETE VERWENDUNG EINES LICHTLEITERS ZUM DARSTELLEN VON LICHTBALKEN IN EINEM FAHRZEUG**
DISPLAY ELEMENT, DISPLAY INSTRUMENT, DISPLAY METHOD, USE OF AN OPTICAL FIBRE AND VEHICLE
ÉLÉMENT D'AFFICHAGE, INSTRUMENT D'AFFICHAGE, PROCÉDÉ D'AFFICHAGE, UTILISATION D'UN GUIDE DE LUMIÈRE ET VÉHICULE

(30) Priorität: 21.07.2012 DE 102012014452
(43) Veröffentlichungstag der Anmeldung: 27.05.2015
(73) Patentinhaber: Audi AG, 85045 Ingolstadt (DE)
(72) Erfinder: SCHWANTNER, Stephan, 85125 Haunstetten Eichstätt (DE)
(74) Vertreter: Brandt, Kai
(86) Internationale Anmeldenummer: PCT/EP2013/002013
(87) Internationale Veröffentlichungsnummer: WO 2014/015945

(56) Entgegenhaltungen:
- DE-A1- 19 622 900
- JP-A- 2002 365 096
- JP-A- 2004 354 455
- US-A1- 2010 232 138
- US-A1- 2012 014 092

## Beschreibung

Die vorliegende Erfindung betrifft ein Anzeigeelement, das mehrere nebeneinander angeordnete Lichtkammern umfasst, die jeweils eine Lichtbarriere zur jeweils benachbarten Lichtkammer aufweisen. Das Anzeigeelement kann beispielsweise für eine Tankfüllanzeige, für eine Geschwindigkeitsanzeige oder für eine Drehzahlanzeige verwendet werden. Das Anzeigelement kann ein Teil eines Kombiinstruments sein.

Außerdem betrifft die Erfindung ein Anzeigeinstrument und ein Fahrzeug.

Darüberhinaus betrifft die Erfindung ein Anzeigeverfahren.

Des Weiteren betrifft die Erfindung eine Verwendung eines Lichtleiters.

Die US 2012/014092 A1 beschreibt eine Lichtleitplatte mit mehreren prismenförmigen Aussparungen, in denen lichtemittierende Dioden angeordnet sind.

Die JP 2004 354455 A beschreibt Kammern mit lichtreflektierenden Seitenwänden. Die Seitenwände gehören zu einem Gehäuseteil aus weißem Kunststoff.

Die JP 2002 365096 A beschreibt konvexe Reflexionsoberflächen, die zwischen Lichtquellen angeordnet sind.

Die gattungsgemäße US 2010/232138 A1 beschreibt eine Lichtleitplatte mit Nuten, in denen Lichtquellen angeordnet sind. Um in der Lichtleitplatte ein weicheres Licht zu erzeugen, ist jeweils an einer Nutseite eine optische Struktur angebracht, die beispielsweise aus feinen Punkten besteht, die Licht reflektieren und brechen.

Die DE 196 22 900 A1 beschreibt ein Anzeigeelement, das mehrere nebeneinander angeordnete Fotoleiterteile umfasst, an denen jeweils ein Reflexionsfilm entweder an einer rechten oder linken Anbauoberfläche der Fotoleiterteile angeordnet ist.

Die DE 196 06 245 B4 schlägt ein Anzeigeinstrument mit separat ansteuerbaren Lichtkammern vor, deren Trennwände als Lichtleiter ausgebildet sind.

Diese bekannte Anzeigetechnik hat den Nachteil, dass diese Art der Balkendarstellung (Bargraph-Darstellung) dem Nutzer einen groben und/oder verwischten und somit altmodischen Eindruck vermittelt. Denn der jeweils aktuell beleuchtete Balkenbereich wird aufgrund der Trennwände zwischen den Lichtkammern nicht lückenlos dargestellt. Aufgrund der heute üblichen hohen Auflösung von bildlichen Darstellungen auf Computerbildschirmen und Smartphones sind auch die Nutzererwartungen an eine optische Exaktheit anderer Arten von elektronischen Anzeigen gestiegen.

Es ist Aufgabe der vorliegenden Erfindung, ein Anzeigeelement bereitzustellen, dessen Darstellung heutigen Erwartungen an eine technisch einwandfreie optische Ausgabe entspricht.

Diese Aufgabe wird erfindungsgemäß durch ein Anzeigeelement gemäß Patentanspruch 1, durch ein Anzeigeinstrument gemäß Patentanspruch 7, durch ein Fahrzeug gemäß Patentanspruch 8, durch ein Anzeigeverfahren gemäß Patentanspruch 9 und durch eine Verwendung eines Lichtleiters gemäß Patentanspruch 10 gelöst. Vorteilhafte Weiterbildungen der vorliegenden Erfindungen sind in den Unteransprüchen angegeben.

Das erfindungsgemäße Anzeigeelement umfasst mehrere nebeneinander angeordnete Lichtkammern, die jeweils eine Lichtbarriere zu einer jeweils benachbarten Lichtkammer aufweisen. Die Lichtkammern umfassen jeweils einen Lichtleiter, wobei die Lichtbarriere von einer Seite des Lichtleiters gebildet wird, die lichtundurchlässig (d. h. nicht lichtdurchlässig) oder nur teilweise lichtdurchlässig ist. Der Lichtleiter ist zu einem Lichtleiter der jeweils benachbarten Lichtkammer beabstandet.

In Bezug auf das Anzeigeinstrument wird die Aufgabe dadurch gelöst, dass das Anzeigeinstrument ein erfindungsgemäßes Anzeigelement umfasst.

In Bezug auf Fahrzeug wird die Aufgabe dadurch gelöst, dass das Fahrzeug ein erfindungsgemäßes Anzeigeelement und/oder ein erfindungsgemäßes Anzeigeinstrument umfasst.

In Bezug auf das Anzeigeverfahren wird die Aufgabe dadurch gelöst, dass bei einer Anzeige mittels eines erfindungsgemäßen Anzeigeelements zwischen aktuell beleuchteten Lichtkammern keine Lichtkammer unbeleuchtet gelassen wird, so dass mittels des Anzeigeelements ein lückenloser Balken (Bar-Graph) dargestellt wird.

In Bezug auf die Verwendung eines Lichtleiters wird die Aufgabe dadurch gelöst, dass eine lichtundurchlässige oder nur teilweise lichtdurchlässige Seite eines Lichtleiters als Trennwand einer Lichtkammer eines Anzeigelements verwendet wird, wobei der Lichtleiter zu einem Lichtleiter einer jeweils benachbarten Lichtkammer beabstandet ist.

Mittels der lichtundurchlässigen (d. h. nicht lichtdurchlässigen) oder nur teilweise lichtdurchlässigen Seite des Lichtleiters wird das in einer und/oder für eine Lichtkammer erzeugte Licht an der lichtundurchlässigen oder nur teilweise lichtdurchlässigen Seite des Lichtleiters absorbiert und/oder reflektiert. Wenn benachbarte Lichtkammern mittels lichtkammerspezifischer Lichtquellen lückenlos beleuchtet werden, entsteht für einen Betrachter der optische Eindruck (die Illusion), dass es sich nur um eine einzige durchgehende Lichtkammer handelt.

Einerseits wird mittels der Lichtdurchflutung der Lichtleiter bis zur lichtundurchlässigen oder nur teilweise lichtdurchlässigen Seite des Lichtleiters der letzten beleuchteten Lichtkammer dem Nutzer eine einzige durchgehende Lichtquelle suggeriert. Andererseits verhindert die lichtundurchlässige oder nur teilweise lichtdurchlässige Seite des Lichtleiters ein Durchleuchten in die nächste unbeleuchtete Lichtkammer. Damit wird eine haarscharf abgegrenzte Beleuchtung einer Skala erreicht.

Aufgrund der haarscharfen Abgrenzung kann der Betrachter aus dem optischen Erscheinungsbild der Anzeige nicht ohne Weiteres auf deren Stufigkeit schließen. Damit gewinnt der Nutzer im Betrieb des Anzeigeelements von dem Anzeigeelement denselben Eindruck, als wenn es sich um ein Anzeigeelement mit einer scharf abgegrenzten Analoganzeige handeln würde. Bei mehreren hintereinander geschalteten Lichtkammern entsteht so der Eindruck eines durchgehenden Lichtbalkens (Bar-Graphen), der einer (stufig angesteuerten) analogen Anzeige gleicht, die von ihren Anzeigefähigkeiten her keine Quantisierung (d.h. eine unendlich hohe Auflösung) aufweist. Somit wird mit dem vorgeschlagenen Anzeigeelement ein Anzeigeelement bereitgestellt, dessen Darstellung heutigen Erwartungen an eine elegante, technisch einwandfreie optische Ausgabe entspricht.

Bevorzugt ist, wenn die lichtundurchlässige oder nur teilweise lichtdurchlässige Seite verspiegelt oder teilverspiegelt ist. Hierdurch wird ein Wirkungsgrad der Anzeige verbessert. Der Wirkungsgrad ist hier ein Verhältnis zwischen einer vom Nutzer wahrnehmbaren Lichtstärke der Anzeige und einer Lichtstärke der lichtkammerspezifischen Lichtquellen. Außerdem kann mit der Verspiegelung oder Teilverspiegelung auch eine Lichtverteilung innerhalb der Lichtkammern verbessert werden.

Zweckmäßig ist, wenn eine zweite Seite des Lichtleiters der ersten Seite des Lichtleiters diametral gegenüberliegt und lichtdurchlässig ist. Hierdurch wird eine von Nutzer wahrnehmbare Lichtkante innerhalb eines Balkensegments vermieden.

Besonders bevorzugt ist, wenn die Lichtkammern nebeneinander gereiht angeordnet sind. Hierdurch dann das Anzeigeelement für eine für den Nutzer intuitiv leicht verständliche Balkenanzeige (d.h. zur Darstellung eines Bar-Graphen) zwecks Anzeige eines Quasianalogwerts genutzt werden.

Eine Ausführungsform sieht vor, dass die Lichtkammern jeweils mindestens eine elektrische Lichtquelle umfassen.

Vorteilhaft ist, wenn die elektrische Lichtquelle eine LED aufweist. Jede der beiden vorgenannten Maßnahmen stellt einen Beitrag für eine kostengünstige Realisierung der Anzeige mit bewährten Technologien dar.

Die vorliegende Erfindung wird nun anhand der beigefügten Zeichnungen näher erläutert. Dabei zeigen:
- Fig. 1: schematisch einen seitlichen Längsschnitt durch ein Balkenanzeigeelement während eines Betriebs des Balkenanzeigeelements; und
- Fig. 2: schematisch eine Draufsicht auf das Balkenanzeigeelement während des Betriebs des Balkenanzeigeelements.

Die nachfolgend näher beschriebenen Ausführungsbeispiele stellen bevorzugte Ausführungsformen der vorliegenden Erfindung dar.

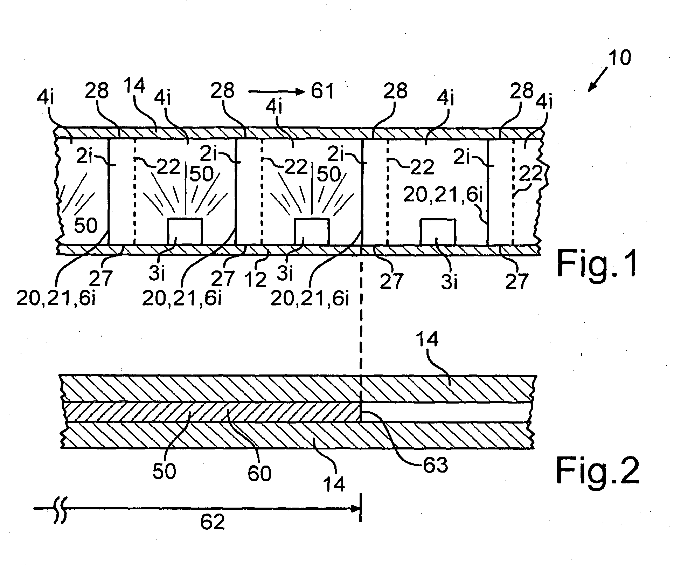

Das in Fig. 1 gezeigte Balkenanzeigeelement 10 umfasst eine Leiterplatte 12, auf der mehrere Lichtleiter 2i quer zur Balkenrichtung 61 angeordnet sind. Parallel zur Leiterplatte 12 ist ein Ziffernblatt 14 des Balkenanzeigelements 10 angeordnet. Die Lichtleiter 12 schließen jeweils zu einer Unterkante 27 bündig mit der Leiterplatte 12 ab und zu einer Oberkante 28 bündig mit dem Ziffernblatt 14 ab. Zwischen den Lichtleitern 2i sind einzeln ansteuerbare Lichtquellen 3i (typischerweise LED) angeordnet. Jeder der Lichtleiter 2i hat auf einer ersten 21 seiner beiden Seiten 21, 22, die benachbarten Lichtleitern 2i zugewandt sind, eine spiegelnde und/oder lichtundurchlässige Oberfläche 20.

Erstens definieren die lichtundurchlässigen ersten Seiten 21 der Lichtleiter 2i Grenzen von Lichtkammern 4i, an denen ein Hineinleuchten der Lichtquellen 3i in Lichtkammern 4i, die der jeweils eigenen Lichtkammer 4i benachbart sind, verhindert wird. Insbesondere bleibt dadurch diejenige Lichtkammer 4i unbeleuchtet, die der letzten (für eine aktuell anzuzeigende Balkenlänge 62) aktuell beleuchteten Lichtkammer 4i direkt benachbart ist. Dies hat den Vorteil, dass das tatsächlich beleuchtete Ende 63 des Balkens (welches für den Nutzer wichtig ist, weil er anhand des Balkenendes 63 den angezeigten aktuellen Quasianalogwert abliest), exakt mit der aktuelle Lichtgrenze 6i der letzten beleuchteten Lichtkammer 4i in der Reihe von Lichtkammern 4i übereinstimmt.

Zweitens kann dadurch, dass der Lichtleiter 2i auf der zweiten 22 seiner beiden Seiten 21, 22 (die benachbarten Lichtleitern 2i zugewandt sind), lichtdurchlässig ist, sich von den Lichtquellen 3i ausgehendes Licht 50 jeweils bis an die ganz schmale Grenze 6i der Lichtkammern 4i ausbreiten. Dies hat den Vorteil, dass die Grenze 63 zwischen einer beleuchteten und einer unbeleuchteten Lichtkammer 4i nicht verschwimmt, sondern haarscharf dargestellt wird. Wenn zwischen beleuchteten Lichtkammern 4i keine Lichtkammer 4i unbeleuchtet gelassen wird, vermittelt die Balkenanzeige 10 dem Nutzer optisch den vorteilhaften Eindruck einer stufenlosen, hochgenauen Anzeige.

Durch die spiegelnde und/oder lichtundurchlässige Oberfläche 20 wird eine Lichtverteilung innerhalb der Lichtkammer 4i und eine Lichtausbeute verbessert.

Fig. 2 zeigt schematisch eine Draufsicht auf das Balkenanzeigeelement 10 während des Betriebs des Balkenanzeigeelements 10.

Das vorgeschlagene Balkenanzeigeelement 10 hat folgende Vorteile:
- Mit dem lückenlosen Lichtbalken 60 (Bar-Graphen) wird eine höchste Auflösung der Anzeige 10 suggeriert.
- Die Balkenanzeige 10 inszeniert für den Nutzer ein futuristisches Design.
- Das Balkenanzeigeelement 10 ist robust und kostengünstig herstellbar und anwendbar. Zusätzliche Kosten entstehen nur durch die Kosten für das Herstellen einer Lichtundurchlässigkeit oder das Herstellen einer nur teilweisen Lichtdurchlässigkeit.
- Der Balken (Bargraph) 60 kann mit beliebigen Breitenverläufen und Krümmungsverläufen ausgestaltet werden.

## Patentansprüche

1. Anzeigeelement (10), wobei das Anzeigeelement (10) mehrere nebeneinander angeordnete Lichtkammern (4i) umfasst, die jeweils eine Lichtbarriere (20) zu einer jeweils benachbarten Lichtkammer (4i) aufweisen,
wobei die Lichtkammern (4i) jeweils einen Lichtleiter (2i) umfassen, wobei die Lichtbarriere (20) von einer Seite des Lichtleiters (2i) gebildet wird, die lichtundurchlässig oder nur teilweise lichtdurchlässig ist, **dadurch gekennzeichnet, dass**
der Lichtleiter (2i) zu einem Lichtleiter (2i) der jeweils benachbarten Lichtkammer (4i) beabstandet ist.

2. Anzeigeelement (10) nach Anspruch 1, **dadurch gekennzeichnet, dass** die lichtundurchlässige oder nur teilweise lichtdurchlässige Seite (20) verspiegelt oder teilverspiegelt ist.

3. Anzeigeelement (10) nach Anspruch 1 oder 2, **dadurch gekennzeichnet, dass** eine zweite Seite (22) des Lichtleiters (2i) der ersten Seite des Lichtleiters (21) diametral gegenüberliegt und lichtdurchlässig ist.

4. Anzeigeelement (10) nach einem der Ansprüche 1 bis 3, **dadurch gekennzeichnet, dass** die Lichtkammern (4i) nebeneinander gereiht angeordnet sind.

5. Anzeigeelement (10) nach einem der Ansprüche 1 bis 4, **dadurch gekennzeichnet, dass** die Lichtkammern (4i) jeweils mindestens eine elektrische Lichtquelle (3i) umfassen.

6. Anzeigeelement (10) nach Anspruch 5, **dadurch gekennzeichnet, dass** die elektrische Lichtquelle (3i) eine LED aufweist.

7. Anzeigeinstrument,
**dadurch gekennzeichnet, dass**
das Anzeigeinstrument ein Anzeigelement (10) nach einem der Ansprüche 1 bis 6 umfasst.

8. Fahrzeug,
**dadurch gekennzeichnet, dass**
das Fahrzeug ein Anzeigeelement (10) nach einem der Ansprüche 1 bis 6 und/oder ein Anzeigeinstrument nach Anspruch 7 umfasst.

9. Anzeigeverfahren,
**dadurch gekennzeichnet, dass**
bei einer Anzeige mittels des Anzeigeelements (10) nach einem der Ansprüche 4 bis 6 zwischen aktuell beleuchteten Lichtkammern (4i) keine Lichtkammer (4i) unbeleuchtet gelassen wird, so dass mittels des Anzeigeelements (10) ein lückenloser Balken (60) dargestellt wird.

10. Verwendung eines Lichtleiters (2i),
wobei eine lichtundurchlässige oder nur teilweise lichtdurchlässige Seite (21) eines Lichtleiters (2i) als Trennwand einer Lichtkammer (4i) eines Anzeigelements (10) verwendet wird,
**dadurch gekennzeichnet, dass**
der Lichtleiter (2i) zu einem Lichtleiter (2i) einer jeweils benachbarten Lichtkammer (4i) beabstandet ist.

## Claims

1. Display element (10), wherein the display element (10) comprises a plurality of adjacently arranged light chambers (4i), each having a light barrier (20) to a respective adjacent light chamber (4i),
wherein the light chambers (4i) each have a light conductor (2i), wherein the light barrier (20) is formed from one side of the light conductor (2i), which is opaque or partially opaque,
**characterized in that**
the light conductor (2i) is spaced apart from a light conductor (2i) of the respective adjacent light chamber (4i).

2. Display element (10) according to claim 1, **characterized in that** the opaque or only partially opaque side (20) is mirrored or partially mirrored.

3. Display element (10) according to claim 1 or 2, **characterized in that** a second side (22) of the light conductor (2i) of the first side of the light conductor (21) is diametrically opposite and transparent.

4. Display element (10) according to any one of claims 1 to 3, **characterized in that** the light chambers (4i) are arranged side by side in a row.

5. Display element (10) according to one of claims 1 to 4, **characterized in that** the light chambers (4i) each comprise at least one electrical light source (3i).

6. Display element (10) according to claim 5, **characterized in that** the electric light source (3i) has a LED.

7. Display instrument,
**characterized in that**
the display instrument includes a display element (10) according to any one of claims 1 to 6.

8. Vehicle,
**characterized in that**
the vehicle comprises a display element (10) according to any one of claims 1 to 6 and/or a display instrument according to claim 7.

9. A display method,
**characterized in that**
in a display by means of the display element (10) according to any one of claims 4 to 6, between currently lit light chambers (4i) no light chamber (4i) is left unlit, so that by means of the display element (10) an unbroken beam (60) is shown.

10. Use of a light conductor (2i)
wherein an opaque or only partially opaque side (21) of a light conductor (2i) is used as a partition for a light chamber (4i) of a display element (10), **characterized in that**
the light conductor (2i) is spaced from a light conductor (2i) of a respective adjacent light chamber (4i).

## Revendications

1. Élément d'affichage (10), l'élément d'affichage (10) comportant plusieurs chambres de lumière (4i) qui sont agencées les unes à côté des autres et qui comportent chacune une barrière de lumière (20) vers une chambre de lumière (4i) respectivement voisine,
les chambres de lumière (4i) comprenant à chaque fois un conducteur de lumière (2i),
la barrière de lumière (20) étant formée par un côté du conducteur de lumière (2i) qui est opaque ou seulement partiellement transparent,
**caractérisé en ce que** le conducteur de lumière (2i) est à une certaine distance d'un conducteur de lumière (2i) de la chambre de lumière (4i) respectivement voisine.

2. Élément d'affichage (10) selon la revendication 1, **caractérisé en ce que** le côté (20) opaque ou seulement partiellement transparent est réfléchissant ou partiellement réfléchissant.

3. Élément d'affichage (10) selon la revendication 1 ou 2, **caractérisé en ce qu'**un deuxième côté (22) du conducteur de lumière (2i) est diamétralement opposé au premier côté du conducteur de lumière (21) et transparent.

4. Élément d'affichage (10) selon l'une des revendications 1 à 3, **caractérisé en ce que** les chambres de lumière (4i) sont agencées rangées les unes à côté des autres.

5. Élément d'affichage (10) selon l'une des revendications 1 à 4, **caractérisé en ce que** les chambres de lumière (4i) comprennent chacune au moins une source lumineuse électrique (3i).

6. Élément d'affichage (10) selon la revendication 5, **caractérisé en ce que** la source lumineuse électrique (3i) comporte une LED.

7. Instrument d'affichage, **caractérisé en ce que** l'instrument d'affichage comprend un élément d'affichage (10) selon l'une des revendications 1 à 6.

8. Véhicule, **caractérisé en ce que** le véhicule comprend un élément d'affichage (10) selon l'une des revendications 1 à 6 et/ou un instrument d'affichage selon la revendication 7.

9. Procédé d'affichage, **caractérisé en ce que**, lors d'un affichage au moyen de l'élément d'affichage (10) selon l'une des revendications 4 à 6, aucune chambre de lumière (4i) n'est laissée non éclairée entre des chambres de lumière (4i) actuellement éclairées de telle sorte qu'une barre continue (60) est représentée au moyen de l'élément d'affichage (10).

10. Utilisation d'un conducteur de lumière (2i),
un côté (21) opaque ou seulement partiellement transparent d'un conducteur de lumière (2i) étant utilisé comme paroi de séparation d'une chambre de lumière (4i) d'un élément d'affichage (10),
**caractérisée en ce que** le conducteur de lumière (2i) est à une certaine distance d'un conducteur de lumière (2i) de la chambre de lumière (4i) respectivement voisine.
